Europäisches Patentamt

European Patent Office

Office européen des brevets

(11) Publication number: **0 179 490**
**B1**

(12) **EUROPEAN PATENT SPECIFICATION**

(45) Date of publication of patent specification: **21.03.90**

(51) Int. Cl.⁵: **C 01 B 31/30, H 01 F 1/11**

(21) Application number: **85113612.7**

(22) Date of filing: **25.10.85**

(54) **Particles containing an iron carbide, production process and use thereof.**

(30) Priority: **25.10.84 JP 224968/84**

(43) Date of publication of application:
**30.04.86 Bulletin 86/18**

(45) Publication of the grant of the patent:
**21.03.90 Bulletin 90/12**

(84) Designated Contracting States:
**BE DE FR GB IT NL**

(56) References cited:
**EP-A-0 024 693**
**EP-A-0 123 318**
**US-A-2 535 042**
**US-A-3 885 023**

(73) Proprietor: **DAIKIN INDUSTRIES, LIMITED**
**No. 1-12-39, Umeda Kita-ku**
**Osaka-shi Osaka-fu (JP)**

(72) Inventor: **Okamura, Kazuo**
**1-34, Nakano Kita 1-chome**
**Itami-shi Hyogo-ken (JP)**
Inventor: **Kitamura, Ikuo**
**62-9, Motoyashiki-cho Otsuka**
**Yamashina-ku Kyoto-shi Kyoto-fu (JP)**
Inventor: **Aomi, Hideki**
**33-604, 3-ban Saiwai-cho 2-chome**
**Naniwa-ku Osaka-shi Osaka-fu (JP)**
Inventor: **Koyama, Satoshi**
**32-503, 11-ban Zuiko 4-chome**
**Higashiyodogawa-ku**
**Osaka-shi Osaka-fu (JP)**
Inventor: **Tokunaga, Katsushi**
**5-27, Takawashi 3-chome**
**Habikino-shi Osaka-fu (JP)**

(74) Representative: **Barz, Peter, Dr. et al**
**Patentanwälte Dr. V. Schmied-Kowarzik Dipl.-**
**Ing. G. Dannenberg Dr. P. Weinhold Dr. D. Gudel**
**Dipl.-Ing. S. Schubert Dr. P. Barz**
**Siegfriedstrasse 8**
**D-8000 München 40 (DE)**

Courier Press, Leamington Spa, England.

**Description**

The invention relates to particles containing an iron carbide, a process for their production and their use.

At present, acicular γ-iron oxide is widely used as a magnetic recording material. However, γ-iron oxide having an average axial ratio of at least 1.0 and less than 3.0 is low in the magnetic characteristics such as coercive force, etc. and is not used presently as a magnetic recording material. Despite the above, the iron oxide or starting material thereof such as other iron oxides or iron oxyhydrides are easily prepared and particles obtained therefrom are expected to have a high compact density when coated.

Iron carbide in the form of spherical particles is known to be a magnetic material (US—A—3 572 993). This iron carbide is, however, prepared by heating iron carbonyl in CO or a mixture of CO and $H_2$. The method is dangerous, complicated and is conducted with extreme difficulty. Moreover, the particles produced have a very small average particle size of 0.005 to 0.1 µm, easily agglomerate and are hardly dispersible. Thus, the particles are difficult to handle and are not presently manufactured.

US—A—2 535 042 relates to the production of cementite, which comprises an initial reduction of magnetite, using a carbon-free reducing agent ($H_2$), followed by carburization with carbon monoxide.

US—A—3 885 023 discloses preparing pure iron carbide ($Fe_3C$) by treating ferric oxide ($Fe_2O_3$) with CO at a temperature of 500 to 550°C.

An object of the invention is to provide particles having a relatively high coercive force, which may be easily handled owing to a relatively large average particle size and obtained from an easily available starting iron compound, and a magnetic material containing these particles.

The invention provides particles containing an iron carbide having an average axial ratio of at least 1.0 and less than 3.0 and an average particle size of more than 0.1 µm and up to 5 µm.

These particles can be obtained by a process for producing particles containing an iron carbide having an average axial ratio of at least 1.0 and less than 3.0, and an average particle size of more than 0.1 µm and up to 5 µm, which comprises providing acicular iron oxyhydroxide or acicular iron oxide having an average axial ratio of at least 1.0 and less than 3.0 and an average particle size of more than 0.1 µm and up to 5 µm.

(a) optionally contacting said acicular iron compound with a carbon-free reducing agent and

(b) contacting said acicular iron compound or the product of step (a) with a reducing and carbonizing agent containing one or more carbon atoms, or a mixture of said agent and a carbon-free reducing agent at a temperature of 250 to 400°C.

Examples of preferred iron oxyhydroxides are α-FeOOH (goethite), β-FeOOH (akaganite) and γ-FeOOH (lepidocrosite). Examples of preferred iron oxides are α-$Fe_2O_3$ (hematite), γ-$Fe_2O_3$ (maghemite) and $Fe_3O_4$ (magnetite).

α-$Fe_2O_3$ or γ-$Fe_2O_3$ is, for example, prepared by heating α-FeOOH, β-FeOOH or γ-FeOOH at about 200 to about 350°C, followed by dehydration, or α-$Fe_2O_3$ or γ-$Fe_2O_3$ prepared by heating the resulting product further at about 350 to about 900°C to compact the crystals, and others. β-FeOOH is preferably treated with an aqueous solution of alkaline compound (JP—A—60 155522.

The above-mentioned $Fe_3O_4$ can be prepared by contacting an iron oxide other than $Fe_3O_4$ or iron oxy-hydride with a reducing-and-carbonizing agent containing carbon or a reducing agent not containing carbon, or a mixture thereof, although the $Fe_3O_4$ is not limited to one prepared by these methods. When a reducing-and-carbonizing agent containing carbon or a mixture thereof with a reducing agent not containing carbon, is contacted with an iron oxyhydride or iron oxide other than $Fe_3O_4$ to prepare $Fe_3O_4$, the same contact conditions as those in the process of the invention can also be employed except for the processing time. In this case, the $Fe_3O_4$ formed can be subsequently held in contact with the gas under the same conditions as in the preceding reaction without any interruption to obtain the desired particulate material of the invention.

The starting iron oxyhydroxides or iron oxides can be those having an average axial ratio of at least 1.0 and less than 3.0, and having an average particle size (long axis) of more than 0.1 µm and up to 5 µm. As will be described later, the particles produced are slightly smaller than, but almost unchanged from, the starting material in average axial ratio and in average particle size, so that the particles of the invention in general preferably have such sizes as already stated.

The starting material to be used for the process for producing particles according to the invention may have added thereto a small amount or small amounts of a compound, such as oxide or carbonate of copper, magnesium, manganese or nickel, silicon oxide, potassium salt, sodium salt, etc., as long as the starting material chiefly comprises an iron oxyhydroxide or iron oxide.

The starting iron oxyhydroxide preferably has a pH of at least 5 on the surface thereof as disclosed in JP—A—60—108309. In this case particles having a higher coercive force are produced. The starting iron oxyhydroxide having a pH of less than 5 can be used after it is increased to at least 5 in pH by contact with an aqueous solution of an alkali compound (eg, sodium hydroxide, potassium hydroxide, ammonium hydroxide). Further, alkali-treated iron oxide can also be used. The starting material can be treated with an alkaline compound by contacting the material with an aqueous solution of sodium hydroxide, potassium hydroxide, ammonium hydroxide or other alkaline compound (eg, with an aqueous solution having a pH of at least 8, preferably at least 10), stirring for 30 minutes to 1 hour when required, filtering and drying the mixture.

2

Iron oxyhydroxide or iron oxide can be coated with a cobalt compound, for example, by dispersing the iron compound in an aqueous solution of a cobalt salt (eg. dilute solution of 0.1 to 10% by weight) with stirring at room temperature or with heating, render the dispersion to alkaline with addition of an aqueous solution of an alkaline compound, stirring for 30 minutes to 1 hour when required, filtering and drying the dispersion.

The starting iron compound can be used as coated with a sintering-preventing agent as disclosed in JP—A—60—141611. Examples of useful agents are silicon compounds, boron compounds, aluminum compounds, aliphatic carboxylic acids or salts thereof, phosphorus compounds, titanium compounds, etc.

In the invention, typical examples of the carbon-free reducing agent are $H_2$, $NH_2NH_2$, etc.

As the reducing-and-carbonizing agent, at least one of the following compounds can be used.

① CO

② aliphatic, linear or cyclic, saturated or unsaturated hydrocarbons such as methane, propane, butane, cyclohexane, methylcyclohexane, acetylene, ethylene, propylene, butadiene, isoprene, town gas, etc.

③ aromatic hydrocarbons such as benzene, toluene, xylene, alkylated or alkenylated derivatives thereof having a boiling point up to 150°C.

④ aliphatic alcohols such as methanol, ethanol, propanol, cyclohexanol, etc.

⑤ esters such as methyl formate, ethyl acetate and like esters having a boiling point up to 150°C

⑥ ethers such as lower alkyl ether, vinyl ether and like ethers having a boiling point up to 150°C

⑦ aldehydes such as formaldehyde, acetaldehyde and like aldehydes having a boiling point up to 150°C

⑧ ketones such as acetone, methyl ethyl ketone, methyl isobutyl ketone and like ketones having a boiling point up to 150°C

Particularly preferable reducing-and-carbonizing agent containing carbon are CO, $CH_3OH$, $HCOOCH_3$ and saturated or unsaturated aliphatic hydrocarbons having 1 to 5 carbon atoms.

In the optional step (a) of the process of the invention, the reducing agent containing no carbon can be used as it is or in diluted form. Examples of diluents are $N_2$, argon, helium, etc. The dilution ratio is suitably selected but is preferably about 1.1 to about 10 times (by volume). The contact temperature, contact time, gas flow rate and other conditions depend, for example, on the production history, average axial ratio, average particle size and specific surface area of the iron oxyhydroxide or iron oxide. The preferred contact temperature is about 200 to about 700°C, preferably about 300 to about 400°C. The preferred contact time is about 0.5 to about 6 hours. The preferred gas flow rate (excluding diluent) is about 1 to about 1000 ml S.T.P./min, more preferably about 5 to about 500 ml S.T.P./min, per gram of the starting material. The contact pressure inclusive of that of the diluent is usually 1.01 to 2.03 bar (1 to 2 atm) although this is not limitative.

In the process step (b) of the invention, the reducing-and-carbonizing agent containing carbon or a mixture thereof with the reducing agent not containing carbon can be used as it is or in diluted form. When the mixture is used, the mixing ratio of the reducing-and-carbonizing agent and the reducing agent is suitably selected but is preferably 1/0.05 to 1/5 by volume. Contact conditions are also suitably selected but the preferred contact temperature is about 250 to about 400°C, more preferably about 300 to about 400°C. The preferred contact time is about 0.5 to 6 hours when the contact in (a) is conducted, and about 1 to about 12 hours when the contact in (a) is not conducted. The preferred gas flow rate (excluding diluent) is about 1 to about 1000 ml S.T.P./min, more preferably about 5 to about 500 ml S.T.P./min, per gram of the starting iron compound. The contact pressure inclusive of that of the diluent is usually 1.01 to 2.03 bar (1 to 2 atm), although this is not limitative.

The particulate material obtained by the present process is in the form of generally uniform particles when observed under an electron microscope. The particles are present as primary particles and have the same particulate form as the starting particles of iron oxyhydroxide or iron oxide. The particles obtained by the process are found to contain carbon by elementary analysis and to contain an iron carbide by its X-ray diffraction pattern, which exhibits plane spacings at 2.28Å, 2.20Å, 2.08Å, 2.05Å and 1.92Å. Such a pattern corresponds to $Fe_5C_2$. The iron carbide component of the present material chiefly comprises $Fe_5C_2$, with $Fe_2C$, $Fe_{20}C_9$ ($Fe_{2.2}C$), $Fe_3C$, etc. present conjointly therewith in some cases. It is suitable to represent the iron carbide as $Fe_xC$ ($2 \leq x < 3$).

In the event of incomplete carbonization, the particles obtained by the present process further contain an iron oxide component which is chiefly $Fe_3O_4$. With respect to iron oxides, FeO, $Fe_3O_4$ and $\gamma\text{-}Fe_2O_3$ are generally related to one another in structure. The oxygen atoms in these three oxides are packed in a three-dimensional structure to the highest possible density, and the number of oxygen atoms in $Fe_3O_4$, actually present varies in an overall range covering the numbers of oxygen atoms in these oxides, so that it is suitable to represent the iron oxide in the particles by $FeO_y$ ($1 < y \leq 1.5$).

While the particles prepared by the present process contain iron oxide in addition to the iron carbide component in most cases, the elementary analysis values of C, H and N indicate that the amount of carbon is usually in excess of that calculated from the chemical formula of the iron carbide identified by the X-ray diffraction pattern. It is not clear whether the excess of carbon is present as combined with iron or as free carbon. In this sense, it is probable that the particles obtained by the present process contain elemental carbon. The particles obtained by the present process then include particles at least 1.0 and less than 3.0 in average axial ratio with respect to their shape as primary particles and composed substantially of iron carbide alone or iron carbide and iron oxide and/or elemental carbon.

3

The iron carbide and iron oxide contents of the particles obtained by the present process can be determined from the chemical formulae $Fe_5C_2$ and $Fe_3O_4$, which are confirmed as the main iron carbide and iron oxide components by X-ray diffraction analysis, the result of elementary analysis and the weight gain on ignition. The iron carbide content is preferably at least 20 wt%, more preferably at least 50 wt%. The iron oxide content is preferably up to 70 wt%, more preferably up to 40 wt%.

In the invention, the iron carbide contains $Fe_5C_2$ as a main component and contains preferably about 80 to 100% by weight of $Fe_5C_2$.

The particles obtained by the present process are slightly smaller than but almost the same as the starting particles, namely iron oxyhydroxide or iron oxide, in average axial ratio and average particle size. Accordingly, the particles prepared by the present process have an average axial ratio of at least 1.0 and less than 3.0, and an average particle size (long axis) of more than 0.1 µm and up to 5 µm.

The particles of the present invention containing iron carbide are useful as a magnetic material for magnetic recording as is apparent from the foregoing characteristics, etc., while the use thereof is not limited thereto. For example, the particulate material is usable as a catalyst for preparing lower aliphatic hydrocarbons from CO and $H_2$.

In the present invention, it is possible to produce particles having a relatively high coercive force from an easily available starting iron compound.

The invention will be described below in detail with reference to examples.

In the following examples, characteristics, etc. are determined by the methods described below.

(1) Magnetic characteristics.

Determined in the following method unless otherwise specified.

Coercive force Hc, saturation magnetization ($\sigma s$, e.m.u.) and remanent magnetization ($\sigma r$, e.m.u.) are measured in a magnetic field with a strength of 5 kOe, using a gauss meter equipped with a Hall-effect element and the sample with a packing ratio of 0.2.

(2) Elementary analysis for C, H and N

The sample is subjected to elementary analysis in the conventional method using MT2 CHN CORDER Yanaco, product of Yanagimoto Mfg. Co., Ltd, with passage of oxygen (helium carrier) at 900°C.

(3) Determination of composition

The composition of the product is calculated from the chemical formulae of iron oxide and iron carbide determined by X-ray diffractiometry, the elementary analysis value of C and the weight gain resulting from the following heat treatment. The calculation is conducted on the basis that $Fe_3O_4$, for example, changes into $Fe_2O_3$ having 1.035 times the weight of the former oxide and that $Fe_5C_2$ changes into $Fe_2O_3$ having 1.317 times the weight of the carbide. The weight gain is determined in the conventional method of heat treatment, i.e. by placing the sample in a platinum crucible, then heating the sample in a muffle furnace at 600°C for 1 hour in the air and measuring the resulting weight gain after ascertaining the presence of $\alpha$-$Fe_2O_3$ by X-ray diffraction.

Stated more specifically, it is assumed that the proportions of $Fe_5C_2$, $Fe_3O_4$ and elemental carbon are x, y and z wt%, respectively, and that the carbon analysis value and the weight gain are A and B wt%, respectively. The values x, y and z are then given by the following equations.

$$x + y + \delta z = 100$$
$$1.317x + 1.035y = 100 + B$$
$$z + 0.079x = A$$

## Example 1

Two grams of goethite particles, 0.6 µm in average size (long axis) and 2 in average axial ratio, were placed into a porcelain crucible, which was then inserted into a tubular furnace. After replacing the air in the furnace by nitrogen, the particles were heated to 300°C and kept at this temperature for 2 hours while passing $H_2$ through the furnace at a flow rate of 100 ml/min. The particles were kept at this temperature for 1 hour while passing CO through the furnace at a flow rate of 100 ml/min. The particles were thereafter allowed to cool to room temperature to obtain a black powder.

The X-ray diffraction pattern of the product matched that of $Fe_5C_2$ Iron Carbide on ASTM X-Ray Powder Data File 20—509. The results were given in Tables 1 and 2.

## Examples 2 to 5

A black powder was prepared in the same manner as in Example 1 with use of the starting material and contact conditions listed in Table 1. The results were given in Tables 1 and 2.

Table 1

| Ex. | Starting material | | | Gas contacted | | Contact temp (℃) | Contact time (hr) |
|---|---|---|---|---|---|---|---|
| | kind | particle size($\mu$m) | axial ratio | kind | flow rate (ml/min) | | |
| 1 | $\alpha-FeOOH$ | 0.6 | 2 | $H_2$ | 100 | 300 | 2 |
| | | | | CO | 100 | 300 | 1 |
| 2 | $\alpha-FeOOH$ | 0.6 | 2 | $H_2$ | 100 | 300 | 2 |
| | | | | $CH_2=CH_2$ | 100 | 300 | 1 |
| 3 | $\alpha-FeOOH$ | 0.6 | 2 | $H_2$ | 100 | 300 | 2 |
| | | | | $C_3H_8$ | 100 | 300 | 1 |
| 4 | $\alpha-FeOOH$ | 0.6 | 2 | $H_2$ | 100 | 300 | 2 |
| | | | | $CH_3OH$ | 100 | 300 | 1 |
| 5 | $\alpha-FeOOH$ | 0.6 | 2 | $H_2$ | 100 | 300 | 2 |
| | | | | $HCOOCH_3$ | 100 | 300 | 1 |

Table 2

| Ex. | Product | | Hc | $\sigma s$ | $\sigma r$ | $\sigma r/\sigma s$ | Composition (wt%) | | |
|---|---|---|---|---|---|---|---|---|---|
| | particle size($\mu$m) | axial ratio | | | | | $Fe_3O_4$ | $Fe_5C_2$ | C |
| 1 | 0.5 | 1.8 | 754 | 77.3 | 43.4 | 0.56 | 11 | 81 | 8 |
| 2 | 0.5 | 1.7 | 732 | 75.6 | 40.1 | 0.53 | 10 | 78 | 12 |
| 3 | 0.5 | 1.9 | 759 | 76.5 | 42.8 | 0.56 | 10 | 80 | 10 |
| 4 | 0.5 | 1.7 | 746 | 76.8 | 42.4 | 0.55 | 15 | 80 | 5 |
| 5 | 0.5 | 1.8 | 729 | 74.2 | 38.6 | 0.52 | 18 | 78 | 4 |

Example 6

Two grams of goethite particles, 0.6 μm in average size (long axis) and 2 in average axial ratio, were placed into a porcelain crucible, which was then inserted into a tubular furnace. After replacing the air in the furnace by nitrogen, the particles were heated to 300°C and kept at this temperature for 2.5 hours while passing CO through the furnace at a flow rate of 100 ml/min. The particles were thereafter allowed to cool to room temperature to obtain a black powder.

The contact conditions and results were shown in Tables 3 and 4.

Example 7

One gram of goethite particles, 0.6 μm in average size (long axis) and 2 in average axial ratio, were placed into a porcelain crucible, which was then inserted into a tubular furnace. After replacing the air in the furnace by nitrogen, the particles were heated to 300°C and kept at this temperature for 3 hours while passing Co through the furnace at a flow rate of 300 ml/min. The particles were thereafter allowed to cool to room temperature to obtain a black powder.

The contact conditions and results were shown in Tables 3 and 4.

Example 8

α-FeOOH (3 g) was dehydrated at 600°C for 1 hour to prepare α-Fe$_2$O$_3$. The α-Fe$_2$O$_3$ was reduced with H$_2$ at 400°C for 1 hour and then oxidized in air at 350°C for 1 hour to obtain γ-Fe$_2$O$_3$.

The γ-Fe$_2$O$_3$ was dispersed in 100 ml of 2% aqueous solution of cobalt sulfate with stirring. Thereto added an aqueous solution of NaOH to adjust a pH to 10 and the mixture was stirred at 80°C for 30 minutes. The dispersion was filtered and dried to obtain γ-Fe$_2$O$_3$ coated with cobalt. Two grams of the particles were placed into a porcelain crucible, which was then inserted into a tubular furnace. After replacing the air in the furnace by nitrogen, the particles were heated to 350°C and kept at this temperature for 3 hours while passing CO through the furnace at a flow rate of 100 ml/min. The particles were thereafter allowed to cool to room temperature to obtain a black powder.

The contact conditions and results were shown in Tables 3 and 4.

Examples 9 to 12 and Reference Example 1

Powdery products listed in Table 4 were prepared by contacting the starting iron compounds shown in Table 3 with a gas indicated in Table 3.

Table 3

| Ex. | Starting material | | | Gas contacted | | Contact temp (°C) | Contact time (hr) |
|---|---|---|---|---|---|---|---|
| | kind | particle size (μm) | axial ratio | kind | flow rate (ml/min) | | |
| 6 | α—FeOOH | 0.6 | 2 | CO | 100 | 300 | 2.5 |
| 7 | α—FeOOH | 0.6 | 2 | CO | 300 | 300 | 3.0 |
| 8 | γ—Fe$_2$O$_3$ coated with Co | 0.3 | 1.8 | CO | 100 | 350 | 3.0 |
| 9 | γ—FeOOH | 0.5 | 1.5 | CO | 300 | 300 | 3.0 |
| 10 | α—Fe$_2$O$_3$ | 0.5 | 1.8 | CO/H$_2$ (3/7) | 300 | 400 | 3.0 |
| 11 | α—FeOOH | 0.6 | 2 | CH$_3$OH/H$_2$ (8/2) | 300 | 300 | 3.0 |
| 12 | α—FeOOH | 0.2 | 2 | CO | 100 | 300 | 2.5 |
| Ref. Ex.1 | α—FeOOH | 0.05 | 2 | CO | 100 | 300 | 2.5 |

EP 0 179 490 B1

## T a b l e 4

| Ex. | Product | | Hc | $\sigma$ s | $\sigma$ r | $\sigma$ r／$\sigma$ s | Composition (wt%) | | |
|-----|---------|---|----|----|----|----|----|----|----|
| | particle size($\mu$m) | axial ratio | | | | | Fe$_3$O$_4$ | Fe$_5$C$_2$ | C |
| 6 | 0.5 | 1.8 | 692 | 71.6 | 40.5 | 0.57 | 13 | 75 | 12 |
| 7 | 0.5 | 1.8 | 738 | 74.1 | 45.3 | 0.61 | 10 | 78 | 12 |
| 8 | 0.4 | 2.0 | 523 | 68.5 | 34.2 | 0.50 | 24 | 57 | 19 |
| 9 | 0.5 | 1.3 | 786 | 78.3 | 43.5 | 0.56 | 8 | 81 | 11 |
| 10 | 0.5 | 1.7 | 684 | 69.7 | 38.6 | 0.55 | 15 | 72 | 13 |
| 11 | 0.5 | 1.8 | 714 | 73.5 | 45.0 | 0.61 | 13 | 74 | 13 |
| 12 | 0.2 | 1.8 | 697 | 72.3 | 41.4 | 0.57 | 12 | 76 | 12 |
| Ref. Ex.1 | 0.05 | 1.8 | 705 | 73.2 | 43.6 | 0.60 | 10 | 78 | 12 |

### Example 13

Each of 15 g, 20 g or 25 g of powders obtained in Example 6, Example 12 and Reference Example 1 was added to a vehicle consisting of the following ingredients.

| | |
|---|---|
| vinyl chloride-vinyl acetate copolymer | 5.25 g |
| dioctyl phthalate | 1.00 g |
| lauric acid | 0.2 g |
| toluene | 15.0 g |
| methyl isobutyl ketone | 15.0 g |

Each of the mixture was admixed in a 200-ml porcelain ball mill having 6 iron balls (each 15 mm diameter) incorporated therein at 30 r.p.m. for 6 hours.

The resulting coating composition was applied by a doctor knife to a polyethylene terephthalate film. Table 5 shows the mixing state of the composition.

| Powder | Particle size ($\mu$m) | Axial ratio | Mixing state | | |
|--------|----------------|-------------|------|------|------|
| | | | 15g | 20g | 25g |
| powder of Ex. 6 | 0.6 | 1.8 | 〇 | 〇 | 〇 |
| powder of Ex. 12 | 0.2 | 1.8 | 〇 | 〇 | 〇 |
| powder of Ref.Ex. 1 | 0.05 | 1.8 | 〇 | ✕ | ✕ |

7

**Claims**

1. Particles containing an iron carbide, having an average axial ratio of at least 1.0 and less than 3.0, and an average particle size of more than 0.1 µm and up to 5 µm.

2. A process for producing particles containing an iron carbide having an average axial ratio of at least 1.0 and less than 3.0, and an average particle size of more than 0.1 µm and up to 5 µm, which comprises providing acicular iron oxyhydroxide or acicular iron oxide having an average axial ratio of at least 1.0 and less than 3.0 and an average particle size of more than 0.1 µm and up to 5 µm,

(a) optionally contacting said acicular iron compound with a carbon-free reducing agent and

(b) contacting said acicular iron compound or the product of step (a) with a reducing and carbonizing agent containing one or more carbon atoms, or a mixture of said agent and a carbon-free reducing agent at a temperature of 250 to 400°C.

3. A process as defined in claim 2, wherein said iron oxyhydroxide is α-, β- or γ-FeOOH and said iron oxide is α- or γ-Fe$_2$O$_3$ or Fe$_3$O$_4$.

4. A process as defined in claim 2 or 3, wherein the contact temperature in (a) is 200 to 700°C.

5. A process as defined in any one of claims 2 to 4, wherein said reducing and carbonizing agent, which contains one or more carbon atoms, is CO, CH$_3$OH, HCOOCH$_3$ or a saturated or unsaturated aliphatic hydrocarbon having 1 to 5 carbon atoms.

6. A process as defined in any one of claims 2 to 5, wherein said carbon-free reducing agent is H$_2$.

7. A magnetic material, which comprises particles containing an iron carbide, having an average axial ratio of at least 1.0 and less than 3.0 and an average particle size of more than 0.1 µm and up to 5 µm.

**Patentansprüche**

1. Ein Eisencarbid enthaltende Teilchen mit einem durchschnittlichen Achsenverhältnis von mindestens 1,0 bis weniger als 3,0 und einer durchschnittlichen Teilchengröße im Bereich von mehr als 0,1 µm bis 5 µm.

2. Verfahren zur Herstellung von ein Eisencarbid enthaltenden Teilchen mit einem durchschnittlichen Achsenverhältnis von mindestens 1,0 bis weniger als 3,0 und einer durchschnittlichen Teilchengröße im Bereich von mehr als 0,1 µm bis 5 µm, umfassend die Bereitstellung von nadelförmigem Eisenoxyhydroxid oder nadelförmigem Eisenoxid mit einem durchschnittlichen Achsenverhältnis von mindestens 1,0 bis weniger als 3,0 und einer durchschnittlichen Teilchengröße im Bereich von mehr als 0,1 µm bis 5 µm.

(a) wobei man gegebenenfalls die nadelförmige Eisenverbindung mit einem Kohlenstoff-freien Reduktionsmittel in Kontakt bringt und

(b) wobei man die nadelförmige Eisenverbindung oder das Produkt aus Stufe (a) mit einem Reduktions- und Carbonisierungsmittel, welches ein oder mehrere Kohlenstoffatome enthält, oder einer Mischung aus diesem Mittel und einem Kohlenstoff-freien Reduktionsmittel bei einer Temperatur von 250 bis 400°C in Kontakt bringt.

3. Verfahren nach Anspruch 2, in welchem das Eisenoxyhydroxid α-, β- oder γ-FeOOH und das Eisenoxid α- oder γ-Fe$_2$O$_3$ oder Fe$_3$O$_4$ ist.

4. Verfahren nach Anspruch 2 oder 3, bei dem die Kontakttemperatur in (a) 200 bis 700°C beträgt.

5. Verfahren nach irgendeinem der Ansprüche 2 bis 4, bei dem das Reduktions- und Carbonisierungsmittel, welches ein oder mehrere Kohlenstoffatome enthält, CO, CH$_3$OH, HCOOCH$_3$ oder eine gesättigte oder ungesättigte aliphatische Kohlenwasserstoffverbindung mit 1 bis 5 Kohlenstoffatomen ist.

6. Verfahren nach einem der Ansprüche 2 bis 5, bei dem das Kohlenstoff-freie Reduktionsmittel H$_2$ ist.

7. Magnetisches Material, welches ein Eisencarbid enthaltende Teilchen mit einem durchschnittlichen Achsenverhältnis von mindestens 1,0 bis weniger als 3,0 und einer durchschnittlichen Teilchengröße von mehr als 0,1 µm umfaßt.

**Revendications**

1. Particules contenant un carbure de fer, ayant un rapport axial moyen d'au moins 1,0 et inférieur à 3,0 et une dimension particulaire moyenne supérieure à 0,1 µm et allant jusqu'à 5 µm.

2. Procédé de production de particules contenant un carbure de fer, ayant un rapport axial moyen d'au moins 1,0 et inférieure à 3,0 et une dimension particulaire moyenne supérieure à 0,1 µm et allant jusqu'à 5 µm, caractérisé en ce qu'il comprend la fourniture d'oxyhydroxyde de fer aciculaire ou d'oxyde de fer aciculaire ayant un rapport axial moyen d'au moins 1,0 et inférieur à 3,0 et une dimension particulaire moyenne supérieure à 0,1 µm et allant jusqu'à 5 µm.

(a) la mise en contact éventuelle de ce composé aciculaire du fer avec un agent réducteur exempt de carbone et

(b) la mise en contact de ce composé aciculaire du fer ou du produit de l'étape (a) avec un agent de réduction et de carbonisation contenant un ou plusieurs atomes de carbone, ou un mélange de cet agent et d'un agent réducteur exempt de carbone à un température de 250 à 400°C.

3. Procédé suivant la revendication 2, caractérisé en ce que cet oxyhydroxyde de fer est l'α-, le β- ou le γ-FeOOH et que cet oxyde de fer est l'α- ou le γ-Fe$_2$O$_3$ ou le Fe$_3$O$_4$.

4. Procédé suivant la revendication 2 ou 3, caractérisé en ce que la température de contact dans (a) est de 200 à 700°C.

5. Procédé suivant l'une quelconque des revendications 2 à 4, caractérisé en ce que cet agent de réduction et de carbonisation qui contient un ou plusieurs atomes de carbone, est CO, $CH_3OH$, $HCOOCH_3$ ou un hydrocarbure aliphatique saturé ou insaturé ayant 1 à 5 atomes de carbone.

6. Procédé suivant l'une quelconque des revendications 2 à 5, caractérisé en ce que cet agent réducteur exempt de carbone est $H_2$.

7. Matériau magnétique, caractérisé en ce qu'il comprend des particules contenant un carbure de fer, ayant un rapport axial moyen d'au moins 1,0 et inférieur à 3,0 et une dimension particulaire moyenne supérieure à 0,1 μm et allant jusqu'à 5 μm.